# EUROPEAN PATENT SPECIFICATION

(11) **EP 2 416 597 B1**
(45) Date of publication and mention of the grant of the patent: **16.03.2016**
(21) Application number: 11006396.3
(22) Date of filing: 03.08.2011
(51) Int. Cl.: H04W 4/22, H04W 76/00, H04W 60/06

(54) **Method of handling emergency sessions and related communication device**
Verfahren zur Abwicklung von Notrufsitzungen und zugehörige Kommunikationsvorrichtung
Procédé de gestion de sessions d'urgence et dispositif de communication associé

(30) Priority: 05.08.2010 US 370813 P
(43) Date of publication of application: 08.02.2012
(60) Divisional application: 12007735.9
(73) Proprietor: HTC Corporation, Taoyuan City 330 (TW)
(72) Inventor: Tiwari, Kundan, Taoyuan City Taoyuan County 330 (TW)
(74) Representative: Schmidbauer, Andreas Konrad

(56) References cited:
- US-A1- 2006 089 137
- INTERDIGITAL LLC ET AL: "Requesting emergency bearer services from a CSG cell in LTE", 3GPP DRAFT; C1-102354, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Dublin; 20100702, 5 July 2010 (2010-07-05), XP050443091, [retrieved on 2010-07-05]
- "3rd Generation Partnership Project; Technical Specification Group Core Network and Terminals; Mobile radio interface Layer 3 specification; Core network protocols; Stage 3 (Release 9)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 14 June 2010 (2010-06-14), pages 1-611, XP050441626, [retrieved on 2010-06-14]
- HTC: "Handling of an emergency EPS context when user plane radio bearer can not be established", 3GPP TSG-CT WG1 MEETING #66, 16 August 2010 (2010-08-16), XP002660399,
- HTC: "Handling of collision of a Network Initiated Detach procedure with a Service Request Procedure and a RAU procedure", 3GPP TSG-CT WG1 MEETING #66, 16 August 2010 (2010-08-16), XP002668134,

## Description

### Background of the Invention

### 1. Field of the Invention

The present invention relates to a method of handling emergency sessions in a wireless communication system and a communication device thereof, and more particularly, to a method of handling emergency sessions in abnormal scenarios and a related communication device.

### 2. Description of the Prior Art

In a wireless communication system such as Universal Mobile Telecommunications System (UMTS) or long-term evolution (LTE) system, an emergency session is often provided by a network to a mobile device that is in a limited service state. Receiving emergency services in the limited service state does not require a subscription, yet the mobile device must first establish a session with the network to access emergency services provided by the system.

UMTS provides both circuit switching (CS) and packet switching (PS) services, while the LTE system has been designed to support only packet switched (PS) services. In UMTS, the network is referred to as a universal terrestrial radio access network (UTRAN), comprising a plurality of base stations (Node-Bs) and Radio Network Controllers (RNCs), whereas the mobile devices are referred to as user equipments (UEs). In LTE, an evolved universal terrestrial radio access network (E-UTRAN) includes a plurality of evolved Node-Bs (eNodeBs) and communicates with a plurality of mobile stations, also referred to as user equipments (UEs).

In UMTS, before accessing a service in an external network (e.g. the Internet), the UE needs to perform a packet data protocol (PDP) context activation procedure to activate a PDP context (containing routing information for tunneling packets) to a belonging serving general packet radio service (GPRS) support node (SGSN) and a specific gateway GPRS support node (GGSN), which can support the service.

In LTE, seamless Internet Protocol (IP) connectivity is provided between a UE and a packet data network (PDN) via an evolved packet system (EPS) bearer for accessing the Internet. The EPS bearer is established via an EPS bearer context activation procedure. Note that, in the LTE/LTE-Advance system, the GGSN may be referred to a packet data network gateway (P-GW), the SGSN to a serving gateway (S-GW).

The 3GPP Technical Specification TS 24.301 Release 9 specifies that a UE and a Mobility Management Entity (MME) in the network would locally deactivate an EPS or PDP context when corresponding user plane radio bearers are not established during a service request procedure. This means that when establishing an Emergency EPS or PDP context to make an emergency call, if radio resources are not available in the network (e.g. E-UTRAN doesn't have enough resource) and the E-UTRAN doesn't allocate user plane radio bearers for the emergency context, then the UE and the network will deactivate the EPS context for the emergency bearer services. Thus, when the user dials an emergency call again, the UE needs to initiate the context activation procedure and the service request procedure again to establish the emergency session. This redundant deactivation and activation of the emergency context takes extra time, which is critical in emergencies. In the worst case, if the UE has only an EPS context for emergency bearer services and the network is unable to allocate the resource to it, the UE would locally deactivate the emergency EPS context and perform the attach procedure again. This results in unnecessary additional signaling and hence delays in the establishment of the emergency session.

Additionally, according to the prior art, the emergency session may also be interrupted by a collision between a service request procedure for the emergency session and a network-initiated detach procedure during abnormal scenarios. The 3GPP Technical Specification TS 24.008 Release 9 specifies that when the UE has initiated the service request procedure for the emergency service session (i.e. in a GMM-SERVICE-REQUEST-INITIATED state, or an EMM-SERVICE-REQUEST-INITIATED state), a UE will abort the service request procedure and proceed with the detach procedure after receiving a detach request message from the network. For example, after receiving a detach request message with a detach type "IMSI detach" to detach the UE from CS services, the UE needs to perform a combined tracking area update procedure to attach for CS services again. This procedure will abort the emergency call activation procedure, hence a user will not be able to initiate another emergency service before the detach procedure and a subsequent attachment procedure finishes. Alternatively, if a UE receives a detach request message with a detach type "re-attach not requited" to detach the UE from PS services, then the UE will abort the service request procedure and proceed with the detach procedure. Similarly, the network will abort the service request procedure and proceed with the detach procedure. In this case, the emergency session can only be established after the detach procedure and a subsequent emergency attach procedure is finished. Thus, the emergency call will be delayed. In some time-critical cases this delay will be significant.

Finally, the network can send a detach request message with a detach type "Re-attach not required" and a GPRS mobility management (GMM) cause "IMSI unknown in HLR" to detach the UE from CS services. In a case the UE is attempting a Routing Area Update (RAU) procedure to update a location of the UE in the network, while the network initiates a detach procedure, the UE and the network will abort the RAU procedure and the network initiated detach procedure will proceed. In this case, the next RAU procedure will be started when a periodic RAU timer expires or the UE changes a Routing Area. During this period the UE will miss paging from the network and hence an emergency call-back will fail.

As can be seen from the above, various abnormal scenarios in the prior art could cause unnecessary and redundant signaling delays in the establishment of emergency sessions. Therefore, improvement over the prior art is necessary.

### Summary of the Invention

A method of handling emergency sessions for a wireless communication system and related communication device are provided.

A method of handling an emergency session for a network in a wireless communication system is disclosed. The method comprises having an emergency context for a mobile device corresponding to the emergency session; not deactivating the emergency context for the mobile device when the network does not allocate radio resources to the emergency context; and preserving the emergency context.

A method of handling an emergency session for a mobile device in a wireless communication system is disclosed. The method comprises having an emergency context from a network corresponding to the emergency session; and not deactivating the emergency context when the network does not allocate radio resources to the emergency context.

According to one aspect of the present invention, a method of handling an emergency session for a mobile device in a wireless communication system is provided as set forth in claim 1. The method comprises initiating a service request procedure corresponding to the emergency session in a network; receiving a detach request message from the network when initiating the service request procedure or after having initiated the service request procedure; and continuing the service request procedure when the detach request message is received.

According to another aspect of the present invention, a method of handling an emergency session for a network in a wireless communication system is provided as set forth in claim 5. The method comprises receiving a service request message from a mobile device when the network is initiating a detach procedure; and neither aborting nor ignoring the service request message and proceeding with a service request procedure corresponding to the service request message.

A method of handling an emergency session for a mobile device in a wireless communication system is disclosed. The method comprises receiving a detach request message from a network when a Routing Area Update procedure is ongoing; not aborting the RAU procedure when the detach request message is received; and concurrently proceeding with the RAU procedure and a detach procedure corresponding to the detach request message.

A method of handling an emergency session for a network in a wireless communication system is disclosed. The method comprises receiving a Routing Area Update request message corresponding to an RAU procedure from a mobile device when the network is sending a detach request message to the mobile device; and processing the RAU request message and responding the mobile device with an RAU accept message or an RAU reject message when the RAU request message is received.

A method of handling an emergency session for a mobile device in a wireless communication system is disclosed. The method comprises receiving a detach request message from a network when a Routing Area Update procedure is ongoing; aborting the RAU procedure and proceeding with a detach procedure corresponding to the detach request message when the detach request message is received; and restarting the RAU procedure immediately upon completion of the detach procedure.

A communication device for handling an emergency session in a wireless communication system is disclosed. The communication device comprises means for providing an emergency context for a mobile device corresponding to the emergency session; means for not deactivating the emergency context for the mobile device when the communication device does not allocate radio resources to the emergency context; and means for preserving the emergency context.

A communication device for handling an emergency session in a wireless communication system is disclosed. The communication device comprises means for receiving an emergency context from a network corresponding to the emergency session; means for not deactivating the emergency context when the network does not allocate radio resources to the emergency context.

A communication device for handling an emergency session in a wireless communication system is disclosed. The communication device comprises means for initiating a service request procedure corresponding to the emergency session in a network; means for receiving a detach request message from the network when initiating the service request procedure or after having initiated the service request procedure; and means for not aborting the service request procedure when the detach request message is received.

A communication device of handling an emergency session in a wireless communication system is disclosed. The communication device comprises means for receiving a service request message from a mobile device when the communication device is initiating a detach procedure; and means for neither aborting nor ignoring the service request message and proceeding with a service request procedure corresponding to the service request message.

A communication device of handling an emergency session in a wireless communication system is disclosed. The communication device comprises means for receiving a detach request message from a network when a Routing Area Update (RAU) procedure is ongoing; means for not aborting the RAU procedure when the detach request message is received; and means for continuing the RAU procedure.

A communication device of handling an emergency session in a wireless communication system is disclosed. The communication device comprises means for receiving a detach request message from a network when a Routing Area Update procedure is ongoing; means for not aborting the RAU procedure when the detach request message is received; and means for concurrently proceeding with the RAU procedure and a detach procedure corresponding to the detach request message.

A communication device for handling an emergency session in a wireless communication system is disclosed. The communication device comprises means for receiving a Routing Area Update request message corresponding to an RAU procedure from a mobile device when the communication device is sending a detach request message to the mobile device; and means for processing the RAU request message and responding the mobile device with an RAU accept message or an RAU reject message when the RAU request message is received.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system.
Fig. 2 is a schematic diagram of an exemplary communication device.
Fig. 3 is a flowchart of an exemplary process.
Fig. 4 is a flowchart of an exemplary process.
Fig. 5 is a flowchart of an exemplary process according to an embodiment.
Fig. 6 is a flowchart of an exemplary process according to an embodiment.
Fig. 7 is a flowchart of an exemplary process.
Fig. 8 is a flowchart of an exemplary process.
Fig. 9 is a flowchart of an exemplary process. .

### Detailed Description

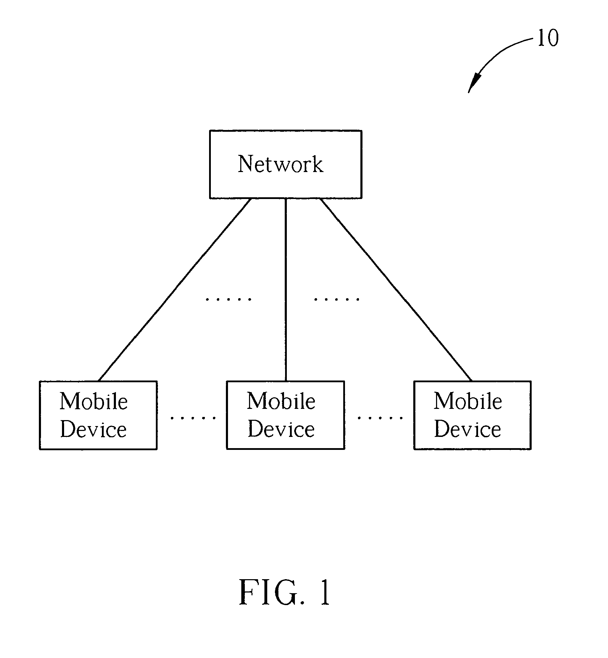

Please refer to Fig. 1, which illustrates a schematic diagram of a wireless communication system 10. Briefly, the wireless communication system 10 is composed of a network and a plurality of mobile devices. In Fig. 1, the network and the mobile devices are simply utilized for illustrating the structure of the wireless communication system 10. The wireless communication system 10 can be a Global System for Mobile communications (GSM), universal mobile telecommunications system (UMTS), long-term evolution (LTE) system or LTE-Advanced system. For example, if the wireless communication system 10 is an LTE system, the network can be referred to as an Evolved Universal Terrestrial Radio Access Network (E-UTRAN) comprising a plurality of base stations (eNodeBs), whereas the mobile devices are referred to as user equipments (UEs). The UEs can be devices such as mobile phones, computer systems, etc. Furthermore, the network and the UE can be seen as a transmitter or a receiver according to a transmission direction, e.g., for uplink (UL), the UE is the transmitter and the network is the receiver, and for downlink (DL), the network is the transmitter and the UE is the receiver.

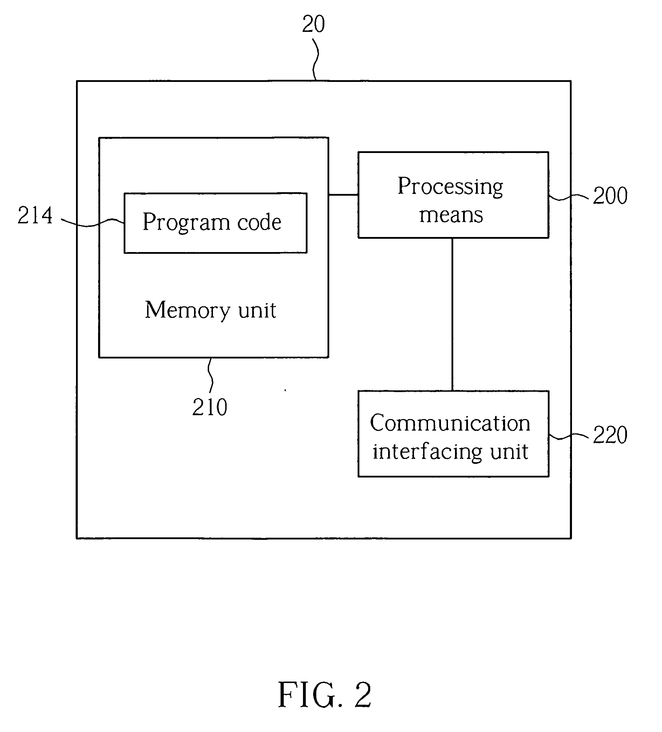

Fig. 2 illustrates a schematic diagram of an exemplary communication device 20. The communication device 20 may be the mobile device shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

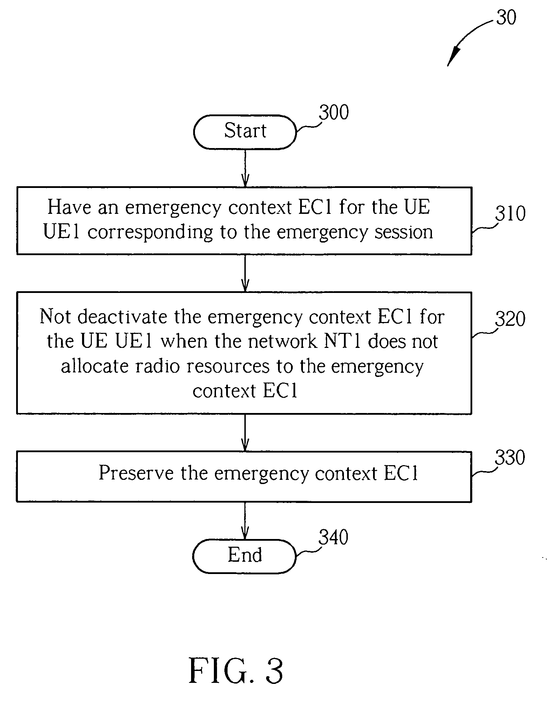

Please refer to Fig. 3, which is a flowchart of an exemplary process 30. The process 30 is utilized for a network NT1 (such as the network of Fig. 1) for handling an emergency session in the wireless communication system 10, including the network NT1 and a UE UE1. The process 30 can be compiled into the program code 214 and includes the following steps:
Step 300: Start.
Step 310: Have an emergency context EC1 for the UE UE1 corresponding to the emergency session.
Step 320: Not deactivate the emergency context EC1 for the UE UE1 when the network NT1 does not allocate radio resources to the emergency context EC1.
Step 330: Preserve the emergency context EC1.
Step 340: End.

According to the process 30, the network NT1 has an emergency context EC1 for the UE UE1. The emergency context EC1 may be an emergency EPS bearer context for LTE, or an emergency PDP context for UMTS. The network NT1 may be E-UTRAN for LTE. When radio resource is not available and the network does not assign the radio bearer to the emergency context EC1, the network NT1 does not deactivate the emergency context EC1 for emergency bearer services and preserves the emergency context EC1. Preferably, the emergency context EC1 is an emergency Evolved Packet System (EPS) context. In this situation, the UE UE1 does not need to initiate an EPS context procedure again when the UE UE1 has to make an outgoing emergency call. Therefore, redundant deactivation and activation steps could be skipped. Further, unnecessary additional signaling and delays in establishment of the emergency session are avoided.

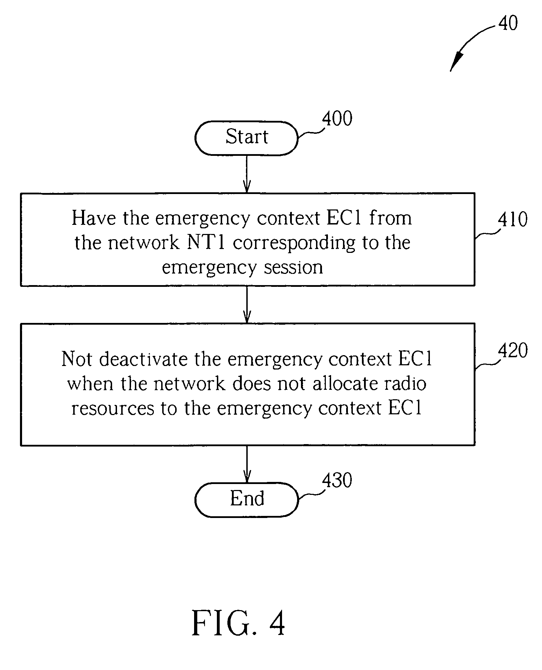

Accordingly, the UE UE1 in the wireless communication system may take corresponding actions. Please refer to Fig. 4, which is a flowchart of an exemplary process 40. The process 40 is utilized in the UE UE1 in the wireless communication system 10 for handling the emergency session. The process 40 can be compiled into the program code 214 and includes the following steps:
Step 400: Start.
Step 410: Have the emergency context EC1 from the network NT1 corresponding to the emergency session.
Step 420: Not deactivate the emergency context EC1 when the network does not allocate radio resources to the emergency context EC1.
Step 430: End.

According to the process 40, if the network NT1 has the emergency context EC1 for the UE UE1 but does not assign radio resources to the emergency context EC1, the UE UE1 is forbidden to deactivate the emergency context EC1 locally. Therefore, the UE UE1 does not need to initiate an EPS context procedure again when the UE UE1 makes an emergency call. Therefore, the redundant deactivation and activation steps could be skipped. Further, unnecessary additional signaling and delays in establishment of the emergency session are avoided.

Briefly, according to the processes 30 and 40, the network NT1 and the UE UE1 preserve the emergency context EC1 (e.g. an emergency EPS bearer context) when the network NT1 does not assign user plane radio resources to the UE UE1, such that unnecessary additional signaling and delays in establishment of the emergency session are avoided.

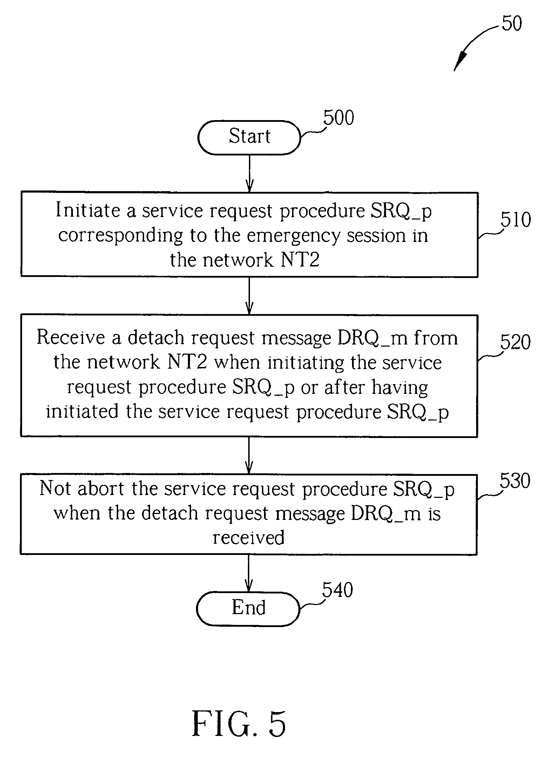

Please refer to Fig. 5, which is a flowchart of an exemplary process 50. The process 50 is utilized for a UE UE2 which is attached for both PS and CS services in a network NT2, for handling an emergency session in a wireless communication system including the network NT2 and the UE UE2. The process 50 can be compiled into the program code 214 and includes the following steps:
Step 500: Start.
Step 510: Initiate a service request procedure SRQ_p corresponding to the emergency session in the network NT2.
Step 520: Receive a detach request message DRQ_m from the network NT2 when initiating the service request procedure SRQ_p or after having initiated the service request procedure SRQ_p.
Step 530: Not abort the service request procedure SRQ_p when the detach request message DRQ_m is received.
Step 540: End.

According to the process 50, the UE UE2 is attached for both PS and CS services in the network NT2. The network NT2 may be E-UTRAN for LTE or U-TRAN for UMTS. The service request procedure SRQ_p is for PS services in the network NT2 corresponding to the emergency session, e.g. for establishing an emergency EPS context, an emergency PDP context, or user plane radio bearers in the network NT2. The UE UE2 receives the detach request message DRQ_m from the network NT2 when initiating the service request procedure SRQ_p or after having initiated the service request procedure SRQ_p, i.e. the UE UE2 is in a mobility management (MM) state of GMM-SERVICE-REQUEST-INITIATED (for UMTS) or EMM-SERVICE-REQUEST-INITIATED (for LTE). In this situation, the service (e.g. emergency bearer service) can keep going without being aborted. Redundant delay may be avoided.

In one case, the detach request message DRQ_m may correspond to a detach procedure DRQ1_p to detach the UE UE2 from CS services in the network NT2. When the UE UE2 receives the detach request message DRQ_m from the network NT2 while initiating or having initiated the service request procedure SRQ_p for PS services, the UE UE2 is forbidden to abort the service request procedure SRQ_p for PS domain. The UE UE2 continues with the service request procedure SRQ_p. For example, the UE UE2 may be IMSI attached for both PS and CS services to a network in Network Operation Mode I (NMO I) and receives the detach request message DRQ_m with a detach type "IMSI detach" or with a detach type "Re-attach not required" with a GMM cause "IMSI unknown in HLR" while the UE UE2 is initiating the PS service request procedure SRQ_p to establish the PDP context or establish the user plane bearers, then the UE UE2 does not abort the PS service procedure SRQ_p and proceeds with the PS services request procedure SRQ_p. Therefore, the network NT2 will not ignore the service request for the PS services from the UE UE2, and unnecessary additional signaling and delays in establishment of the emergency session is avoided.

In another case, the detach request message DRQ_m may correspond to a detach procedure DRQ2_p to detach the UE UE2 from PS services in the network NT2. If the detach request message DRQ_m received has a detach type "Re-attach not required" to detach the UE UE2 from the PS services while the UE UE2 is initiating the service request procedure SRQ_p or has initiated a service request procedure SRQ_p, the UE UE2 is forbidden to abort the service request procedure SRQ_p and continues the service request procedure SRQ_p. The service request procedure SRQ_p may be for establishing a PDP context for emergency bearer services. The UE UE2 deactivates all non-emergency PDP contexts if any. The UE UE2 sends a detach accept message to the network and considers itself attached for emergency bearer services only. The UE UE2 initiates a PDP or EPS context activation procedure for emergency PDP or EPS context.

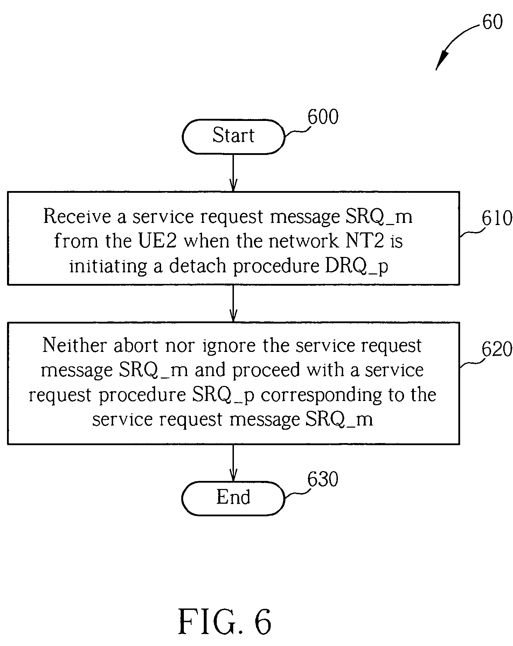

Accordingly, the network NT2 in the wireless communication system may take corresponding actions. Please refer to Fig. 6, which is a flowchart of an exemplary process 60. The process 60 is utilized for the network NT2, for handling an emergency session in the wireless communication system including the network NT2 and the UE UE2. The process 60 can be compiled into the program code 214 and includes the following steps:
Step 600: Start.
Step 610: Receive a service request message SRQ_m from the UE2 when the network NT2 is initiating a detach procedure DRQ_p.
Step 620: Neither abort nor ignore the service request message SRQ_m and proceed with a service request procedure SRQ_p corresponding to the service request message SRQ_m.
Step 630: End.

According to the process 60, the service request message SRQ_m corresponds to the service request procedure SRQ_p, for PS services in the network NT2 corresponding to the emergency session, e.g. for establishing an emergency EPS/PDP context, or user plane radio bearers. The detach procedure DRQ_p may be the detach procedure DRQ1_p or the detach procedure DRQ1_p, to detach the UE UE2 from CS and PS services, respectively. The network NT2 is forbidden to ignore or abort the service request message SRQ_m for PS services and proceeds with the corresponding service request procedure SRQ_p.

For example, if the network NT2 is operating in a network mode of operation I(NMO I) and receives PS service request message SRQ_m from the UE UE2 attached for both PS and CS services, while it has sent the detach request message DRQ_m with a detach type "IMSI detach" or "Re-attach not required" with a GMM cause "IMSI unknown in HLR", the network NT2 shall not ignore the PS Service Request message SRQ_m from the UE UE2 and proceeds with the PS Service Request procedure SRQ_p, i.e. the network NT2 may establish the PDP context or assign resources for user plane bearer services. Therefore, delays caused by the detach procedure DRQ_p and subsequent redundant re-attach steps could be skipped, and unnecessary delays in establishment of the emergency session are avoided.

Briefly, according to the processes 50 and 60, the network NT2 does not abort or ignore the service request message SRQ_m from the UE UE2 when initiating the detach procedure DRQ_p, such that establishment of the emergency session is not delayed by the detach procedure DRQ_p.

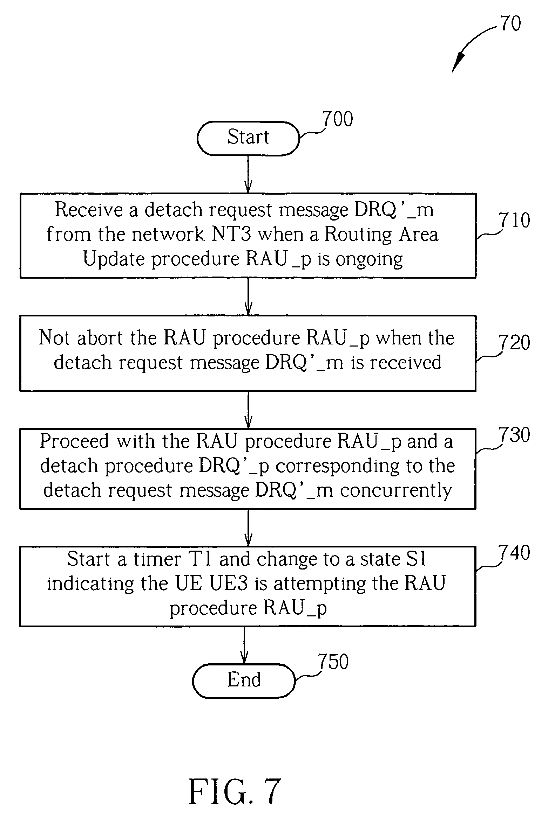

Please refer to Fig. 7, which is a flowchart of an exemplary process 70. The process 70 is utilized for a UE UE3 for handling an emergency session in a wireless communication system including a network NT3 and the UE UE3. The process 70 can be compiled into the program code 214 and includes the following steps:
Step 700: Start.
Step 710: Receive a detach request message DRQ'_m from the network NT3 when a Routing Area Update procedure RAU_p is ongoing.
Step 720: Not abort the RAU procedure RAU_p when the detach request message DRQ'_m is received.
Step 730: Proceed with the RAU procedure RAU_p and a detach procedure DRQ'_p corresponding to the detach request message DRQ'_m concurrently.
Step 740: Start a timer T1 and change to a state S1 indicating the UE UE3 is attempting the RAU procedure RAU_p.
Step 750: End.

According to the process 70, when the UE UE3 receives a detach request message DRQ'_m corresponding to a detach request procedure DRQ'_p from the network NT3 while the RAU procedure RAU_p is ongoing, the UE UE3 does not abort the RAU procedure RAU_p. The detach request message DRQ'_m may have a detach type "Re-attach not required" and GMM cause "IMSI unknown in HLR" to detach the UE UE3 from CS services in the network NT3. The UE UE3 proceeds with the RAU procedure RAU_p and the detach procedure DRQ'_p to detach from CS services in the network NT3, and then starts the timer T1 and changes to the state S1 indicating the UE UE3 is attempting the RAU procedure RAU_p. The timer T1 may be a timer T3302, and the state S1 may be a GMM-REGISTERED-ATTEMMPING-TO-UPDATE state according to the 3GPP Technical Specification TS 24.008, but not limited thereto. Therefore, the RAU procedure RAU_p is not aborted and will be successful when collided with the detach procedure DRQ'_p. Further, the RAU procedure RAU_p is not delayed until the timer T1 expires or the UE UE3 changes a routing area.

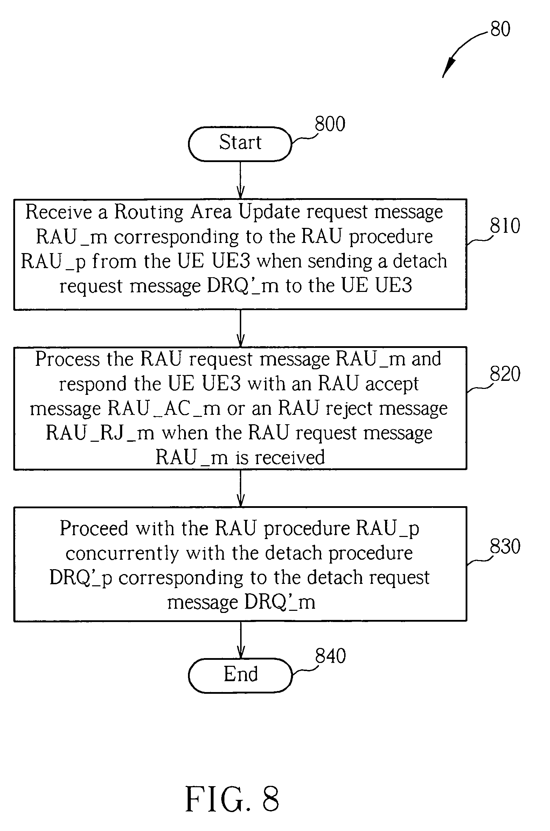

Accordingly, the network NT3 in the wireless communication system may take corresponding actions. Please refer to Fig. 8, which is a flowchart of an exemplary process 80. The process 80 is utilized for the network NT3 for handling the emergency session in the wireless communication system including the network NT3 and the UE UE3. The process 80 can be compiled into the program code 214 and includes the following steps:
Step 800: Start.
Step 810: Receive a Routing Area Update request message RAU_m corresponding to the RAU procedure RAU_p from the UE UE3 when sending a detach request message DRQ'_m to the UE UE3.
Step 820: Process the RAU request message RAU_m and respond the UE UE3 with an RAU accept message RAU_AC_m or an RAU reject message RAU_RJ_m when the RAU request message RAU_m is received.
Step 830: Proceed with the RAU procedure RAU_p concurrently with the detach procedure DRQ'_p corresponding to the detach request message DRQ'_m.
Step 840: End.

According to the process 80, when the network NT3 receives the RAU request message RAU_m from the UE UE3 while sending the detach request message DRQ'_m to detach the UE UE3 from CS services, the network NT3 proceeds with the RAU procedure RAU_p and the detach procedure DRQ'_p to detach the UE UE3 from CS services concurrently and responds the UE UE3 with the RAU accept message RAU_AC_m or the RAU reject message RAU_RJ_m.

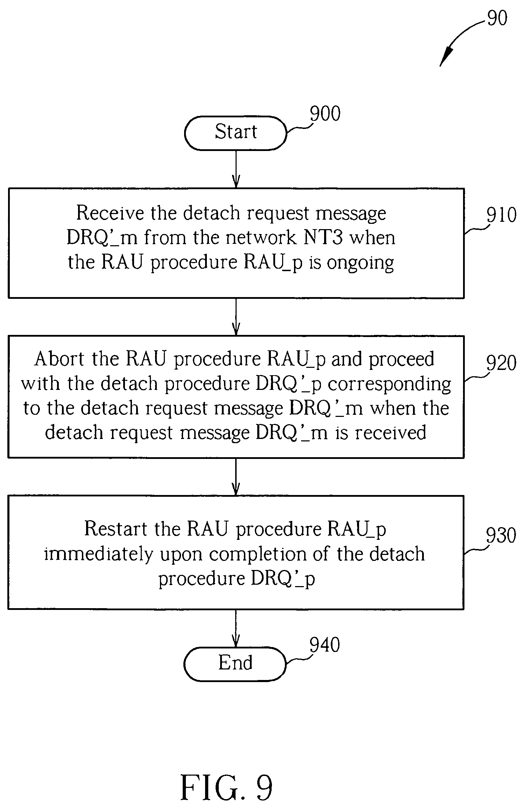

Alternatively, it is possible for the network NT3 to not proceed with the RAU procedure RAU_p and the detach procedure DRQ'_p concurrently. Please refer to Fig. 9, which is a flowchart of an exemplary process 90. The process 90 is utilized in the UE UE3. The process 90 can be compiled into the program code 214 and includes the following steps:
Step 900: Start.
Step 910: Receive the detach request message DRQ'_m from the network NT3 when the RAU procedure RAU_p is ongoing.
Step 920: Abort the RAU procedure RAU_p and proceed with the detach procedure DRQ'_p corresponding to the detach request message DRQ'_m when the detach request message DRQ'_m is received.
Step 930: Restart the RAU procedure RAU_p immediately upon completion of the detach procedure DRQ'_p.
Step 940: End.

According to the process 90, the RAU procedure and the detach procedure DRQ'_p to detach the UE UE3 from CS services of the network NT3 are not proceeded concurrently. Instead, the RAU procedure will be aborted and restarted after the detach procedure DRQ'_p is finished.

Briefly, according to the processes 70, 80, and 90, the RAU procedure RAU_p is processed concurrently with the detach procedure DRQ'_p, or restarted immediately after the detach procedure DRQ'_p is finished. Thus, the RAU procedure RAU_p is not delayed until the time T1 expires or until the UE UE3 changes a routing area, and thus the UE UE3 will not miss paging from the network NT3, and emergency call-back procedures will not fail.

Please note that, the abovementioned steps of the processes 30 to 90 including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (SiP), computer on module (COM), and the communication device 20.

In conclusion, the exemplary examples and means are provided for handling emergency sessions and keeping the emergency context active during abnormal scenarios, so as to minimize unnecessary additional signaling and delays in the establishment of the emergency sessions.

Those skilled in the art will readily observe that numerous modifications and alterations of the device and method may be made while retaining the teachings of the invention. Accordingly, the above disclosure should be construed as limited only by the scope of the appended claims.

## Claims

1. A method of handling an emergency session for a mobile device (20) in a wireless communication system (10), the method comprising:
initiating (510) a service request procedure corresponding to the emergency session in a network;
receiving (520) a detach request message from the network when initiating the service request procedure or after having initiated the service request procedure; and
continuing (530) the service request procedure when the detach request message is received;
wherein the mobile device (20) is attached for both packet switched, PS, and circuit switched, CS, services in the network, the network is an Evolved UMTS Terrestrial Radio Access Network, E-UTRAN, or a UMTS Terrestrial Radio Access Network, UTRAN, and the service request procedure is for PS services in the network, and the detach request message corresponds to a detach procedure to detach the mobile device from CS services in the network.

2. A method of handling an emergency session for a mobile device (20) in a wireless communication system (10), the method comprising:
initiating (510) a service request procedure corresponding to the emergency session in a network;
receiving (520) a detach request message from the network when initiating the service request procedure or after having initiated the service request procedure; and
continuing (530) the service request procedure when the detach request message is received;
wherein the network is an Evolved UMTS Terrestrial Radio Access Network, E-UTRAN, or a UMTS Terrestrial Radio Access Network, UTRAN, the service request procedure is used for establishing an emergency Evolved Packet System, EPS, context or an emergency Packet Data Protocol, PDP, context in the network, or for establishing a radio bearer for the emergency PDP context or the emergency EPS context, and the detach request message corresponds to a detach procedure to detach the mobile device from packet switched, PS, services in the network.

3. The method of claim 2 further comprising:
deactivating any of non-emergency context and sending a detach accept message to the network.

4. The method of claim 2 further comprising:
initiating a PDP or EPS context activation procedure for the emergency PDP or EPS context, or for establishing a radio bearer for the emergency PDP context or the emergency EPS context.

5. A method of handling an emergency session for a network in a wireless communication system (10), the method comprising:
receiving (610) a service request message from a mobile device (20) when the network is initiating a detach procedure; and
proceeding with a service request procedure corresponding to the service request message;
wherein the network is an Evolved UMTS Terrestrial Radio Access Network, E-UTRAN, or a UMTS Terrestrial Radio Access Network, UTRAN, and the service request procedure is for packet switched, PS, services in the network, and the detach procedure is used for detaching the mobile device from circuit switched, CS, services in the network.

6. A method of handling an emergency session for a network in a wireless communication system (10), the method comprising:
receiving (610) a service request message from a mobile device (20) when the network is initiating a detach procedure; and
proceeding with a service request procedure corresponding to the service request message;
wherein the network is an Evolved UMTS Terrestrial Radio Access Network, E-UTRAN, or a UMTS Terrestrial Radio Access Network, UTRAN, and the service request procedure is for establishing an emergency Evolved Packet System, EPS, context or an emergency Packet Data Protocol, PDP, context, or for establishing a radio bearer for the emergency PDP context or the emergency EPS context in the network, and the detach request procedure is used for detaching the mobile device from packet switched, PS, services in the network.

7. The method of claim 6 further comprising proceeding with the detach procedure when the network receives a detach accept message from the mobile device corresponding to the detach procedure; or activating an emergency context activation procedure corresponding to the emergency EPS context or the emergency PDP context, or establishing a radio bearer for the emergency PDP context or the emergency EPS context.

## Patentansprüche

1. Ein Verfahren zum Handhaben einer Notfallsitzung, auch Emergency Session, für ein Mobilgerät (20) in einem Drahtloskommunikationssystem (10), wobei das Verfahren Folgendes aufweist:
Initiieren (510) einer Dienstanforderungsprozedur entsprechend der Notfallsitzung in einem Netzwerk;
Empfangen (520) einer Abtrennungsanforderungsnachricht von dem Netzwerk, wenn die Dienstanforderungsprozedur initiiert wird oder nachdem die Dienstanforderungsprozedur initiiert wurde; und
Weiterführen (530) der Dienstanforderungsprozedur, wenn die Abtrennungsanforderungsnachricht empfangen wurde;
wobei das Mobilgerät (20) für sowohl für paketvermittelte, auch PS = Packet Switched, als auch leitungsvermittelte, auch CS = Circuit Switched, Dienste in dem Netzwerk angeheftet ist, wobei das Netzwerk ein Evolved UMTS Terrestrial Radio Access Netzwerk, E-UTRAN, oder ein UMTS Terrestrial Radio Access Netzwerk, UTRAN, ist, und die Dienstanforderungsprozedur für PS Dienste in dem Netzwerk ist, und die Abtrennungsanforderungsnachricht einer Abtrennungsprozedur zum Abtrennen des Mobilgeräts von CS Diensten in dem Netzwerk entspricht.

2. Ein Verfahren zur Handhaben einer Notfallsitzung, auch Emergency Session, für ein Mobilgerät (20) in einem Drahtloskommunikationssystem (10), wobei das Verfahren Folgendes aufweist:
Initiierten (510) einer Dienstanforderungsprozedur entsprechend der Notfallsitzung in einem Netzwerk;
Empfangen (520) einer Abtrennungsanforderungsnachricht von dem Netzwerk, wenn die Dienstanforderungsprozedur initiiert wird oder nachdem die Dienstanforderungsprozedur initiiert wurde; und
Weiterführen (530) der Dienstanforderungsprozedur, wenn die Abtrennungsanforderungsnachricht empfangen wurde;
wobei das Netzwerk ein Evolved UMTS Terrestrial Radio Access Netzwerk, E-UTRAN, oder ein UMTS Terrestrial Radio Access Netzwerk, UTRAN, ist, wobei die Dienstanforderungsprozedur genutzt wird zum Herstellen einer Notfall-EPS-Kontexts, EPS = Evolved Packet System, oder einer Notfall-PDP-Kontexts, PDP = Packet Data Protocol, in dem Netzwerk, oder zum Herstellen eines Funkträgers für den Notfall-PDP-Kontext oder dem Notfall-EPS-Kontext, und wobei die Abtrennungsanforderungsnachricht einer Abtrennungsprozedur entspricht, und zwar zum Abtrennen des Mobilgeräts von paketvermittelten, auch PS= Packet Switched, Diensten in dem Netzwerk.

3. Verfahren nach Anspruch 2, das ferner Folgendes aufweist:
Deaktivieren von irgendeines nicht-Notfall Kontexts und Senden einer Abtrennungsannahmenachricht an das Netzwerk.

4. Verfahren nach Anspruch 2, das ferner Folgendes aufweist:
Initiieren einer PDP oder EPS Kontextaktivierungsprozedur für den Notfall-PDP- oder EPS-Kontext, oder zum Herstellen eines Funkträgers für den Notfall-PDP-Kontext oder dem Notfall-EPS-Kontext.

5. Ein Verfahren zum Handhaben einer Notfallsitzung, auch Emergency Session, für ein Netzwerk in einem Drahtloskommunikationssystem (10), wobei das Verfahren Folgendes aufweist:
Empfangen (610) einer Dienstanforderungsnachricht von einem Mobilgerät (20), wenn das Netzwerk eine Abtrennungsprozedur initiiert; und
Weiterführen einer Dienstanforderungsprozedur entsprechend der Dienstanforderungsnachricht;
wobei das Netzwerk ein Evolved UMTS Terrestrial Radio Access Netzwerk, e-UTRAN, oder ein UMTS Terrestrial Radio Access Netzwerk, UTRAN, ist, und wobei die Dienstanforderungsnachricht für PS Dienste, PS = Packet Switched, in dem Netzwerk ist, und wobei die Abtrennungsprozedur genutzt wird zum Abtrennen des Mobilgeräts von leitungsvermittelten, auch CS = Circuit Switched, Diensten in dem Netzwerk.

6. Ein Verfahren zum Handhaben einer Notfallsitzung, auch Emergency Session, in einem Netzwerk in einem Drahtloskommunikationssystem (10), wobei das Verfahren Folgendes aufweist:
Empfangen (610) einer Dienstanforderungsnachricht von einem Mobilgerät (20), wenn das Netzwerk eine Abtrennungsprozedur initiiert; und
Weiterführen einer Dienstanforderungsprozedur entsprechend der Dienstanforderungsnachricht;
wobei das Netzwerk ein Evolved UMTS Terrestrial Radio Access Netzwerk, E-UTRAN, oder ein UMTS Terrestrial Radio Access Netzwerk, UTRAN, ist, und die Dienstanforderungsprozedur genutzt wird zum Herstellen eines Notfall-EPS-Kontexts, EPS = Evolved Packet System, oder eines Notfall-PDP-Kontexts, PDP = Packet Data Protocol, oder zum Herstellen eines Funkträgers für den Notfall-PDP-Kontext oder dem Notfall-EPS-Kontext in dem Netzwerk, und die Abtrennungsprozedur genutzt wird zum Abtrennen des Mobilgeräts von paketvermittelten, auch PS= Packet Switched, Diensten in dem Netzwerk.

7. Verfahren nach Anspruch 6, das ferner Weiterführen der Abtrennungsprozedur aufweist, und zwar wenn das Netzwerk eine Abtrennungsannahmenachricht von dem Mobilgerät entsprechend der Abtrennungsprozedur empfängt, oder Aktivieren einer Notfallkontextaktivierungsprozedur entsprechend des Notfall-EPS-Kontexts oder des Notfall-PDP-Kontexts oder Herstellen eines Funkträgers für den Notfall-PDP-Kontext oder den Notfall-EPS-Kontext aufweist.

## Revendications

1. Procédé pour gérer une session d'urgence pour un dispositif mobile (20) dans un système de communication sans fil (10), le procédé comprenant :
lancer (510) une procédure de demande de service correspondant à la session d'urgence dans un réseau ;
recevoir (520) un message de demande de détachement provenant du réseau lors du lancement de la procédure de demande de service ou après avoir lancé la procédure de demande de service ; et
continuer (530) la procédure de demande de service lorsque le message de demande de détachement est reçu ;
dans lequel le dispositif mobile (20) est attaché à la fois à des services à commutation de paquets, PS, et à commutation de circuits, CS, dans le réseau, le réseau est un Réseau d'Accès Radio Terrestre UMTS Évolué, E-UTRAN, ou un Réseau d'Accès Radio Terrestre UMTS, UTRAN, et la procédure de demande de service concerne des services PS dans le réseau, et le message de demande de détachement correspond à une procédure de détachement pour détacher le dispositif mobile de services CS dans le réseau.

2. Procédé pour gérer une session d'urgence pour un dispositif mobile (20) dans un système de communication sans fil (10), le procédé comprenant :
lancer (510) une procédure de demande de service correspondant à une session d'urgence dans un réseau ;
recevoir (520) un message de demande de détachement provenant du réseau lors du lancement de la procédure de demande de service ou après avoir lancé la procédure de demande de service ; et
continuer (530) la procédure de demande de service lorsque le message de demande de détachement est reçu ;
dans lequel le réseau est un Réseau d'Accès Radio Terrestre UMTS Évolué, E-UTRAN, ou un Réseau d'Accès Radio Terrestre UMTS, UTRAN, la procédure de demande de service est utilisée pour établir un contexte de Système de Paquets Évolué, EPS, d'urgence ou un contexte de Protocole de Paquets de Données, PDP, d'urgence dans le réseau, ou pour établir un support radio pour le contexte PDP ou le contexte EPS d'urgence, et le message de demande de détachement correspond à une procédure de détachement pour détacher le dispositif mobile de services à commutation de paquets, PS, dans le réseau.

3. Procédé selon la revendication 2 comprenant en outre :
désactiver tout contexte non d'urgence et envoyer un message d'acceptation de détachement au réseau.

4. Procédé selon la revendication 2, comprenant en outre :
lancer une procédure d'activation de contexte PDP ou EPS pour le contexte PDP ou EPS d'urgence, ou pour établir un support radio pour le contexte PDP d'urgence ou le contexte EPS d'urgence.

5. Procédé pour gérer une session d'urgence pour un réseau dans un système de communication sans fil (10), le procédé comprenant :
recevoir (610) un message de demande de service provenant d'un dispositif mobile (20) lorsque le réseau est en train de lancer une procédure de détachement ; et
procéder à une procédure de demande de service correspondant au message de demande de service ;
dans lequel le réseau est un Réseau d'Accès Radio Terrestre UMTS Évolué, E-UTRAN, ou un Réseau d'Accès Radio Terrestre UMTS, UTRAN, et la procédure de demande de service concerne des services à commutation de paquets, PS, dans le réseau, et la procédure de détachement est utilisée pour détacher le dispositif mobile de services à commutation de circuits, CS, dans le réseau.

6. Procédé pour gérer une session d'urgence pour un réseau dans un système de communication sans fil (10), le procédé comprenant :
recevoir (610) un message de demande de service provenant d'un dispositif mobile (20) lorsque le réseau est en train de lancer une procédure de détachement ; et
procéder à une procédure de demande de service correspondant au message de demande de service ;
dans lequel le réseau est un Réseau d'Accès Radio Terrestre UMTS Évolué, E-UTRAN, ou un Réseau d'Accès Radio Terrestre UMTS, UTRAN, et la procédure de demande de service est destinée à établir un contexte de Système de Paquets Évolué, EPS, d'urgence ou un contexte de Protocole de Paquets de Données, PDP, d'urgence, ou à établir un support radio pour le contexte PDP ou le contexte EPS d'urgence dans le réseau, et la procédure de demande détachement est utilisée pour détacher le dispositif mobile de services à commutation de paquets, PS, dans le réseau.

7. Procédé selon la revendication 6, comprenant en outre le fait de procéder à la procédure de détachement lorsque le réseau reçoit un message d'acceptation de détachement provenant du dispositif mobile et correspondant à la procédure de détachement ; ou d'activer une procédure d'activation de contexte urgence correspondant au contexte EPS d'urgence ou au contexte PDP d'urgence, ou d'établir un support radio pour le contexte PDP d'urgence ou le contexte EPS d'urgence.
